# EUROPEAN PATENT APPLICATION

(11) **EP 3 381 677 A1**
(43) Date of publication of application: **03.10.2018**
(21) Application number: 17170243.4
(22) Date of filing: 09.05.2017
(51) Int. Cl.: B32B 7/12, B32B 17/06, G06F 1/16

(54) **DISPLAY PART PROTECTOR FOR A SMART DEVICE AND METHOD OF ADHERING THE DISPLAY PART PROTECTOR TO THE SURFACE USING THE DEVICE**

(30) Priority: 27.03.2017 KR 20170038672
(71) Applicant: Whitestone Co., Ltd., Chungcheongnam-do 31093 (KR)
(72) Inventor: Ryu, Jongyun, Gyeonggi-do 13608 (KR)
(74) Representative: Beetz & Partner mbB

(57) **Abstract**

Disclosed are a protector having a protecting and restoring function of a display part of a smart device and a method of adhering the display part protector. The display part protector for the smart device according to the present disclosure includes a protector part adhered to at least one of a flat display area and a curved display area of a smart device having at least one of the flat display area and curved display area and an adhesive layer which is formed by spreading a flowable adhesive composition between an entire area of a lower surface of the protector part and a display area of the smart device and then curing the flowable adhesive composition and adheres the entire area of the lower surface of the protector part to the flat display area and the curved display area.

## Description

### BACKGROUND OF THE INVENTION

### 1. Field of the Invention

The present disclosure relates to a display part protector for a smart device including a flat display area or a curved display area and a method of adhering the display part protector, and more particularly, to a display part protector for a smart device having a function of protecting a broken region of a display part including a liquid crystal screen and a function of restoring a damaged smart device and a method of adhering the same.

### 2. Description of the Related Art

A recent smart device (mobile/ tablet/ automotive electric component) is an expensive product and has a structure which protects a display part, that is, a touch panel by applying a flat or 2.5D or 3D cover glass on an entire surface. Such a cover glass has a high risk of being damaged or broken due to a physical shock or falling.

When a damaged or broken cover glass is repaired, it will cost about 30 to 40% of the smart device. Further, it takes a considerable amount of time of two hours to two days to repair the damaged or broken cover glass. Further, an outer appearance is not good and a surface thereof is sharp, which may cause injury and malfunction.

However, when the cover glass of the smart device is damaged or broken, a user may often use the smart device with inconvenience and danger due to expensive repairing costs and ignore minor damage such as scratches in many cases.

Accordingly, improvements which allow general consumers to easily adhere a protective glass or a protective film on the broken display part of the smart device are required.

Further, when a general protective film or protective glass is adhered on a damaged display part of the smart device, a damaged part is not restored so that a similar performance to an original display part is not secured. Therefore, an improvement therefor is also required.

### SUMMARY OF THE INVENTION

An object of the present disclosure is to provide a display part protector for a smart device which allows the general consumers to easily adhere a protector to a display part of a smart device to reduce a risk of damage and restores the damaged part so as to have a similar performance to the original display part.

Another object of the present disclosure is to provide a method of adhering the protector to the smart device.

According to an aspect of the present disclosure, a display part protector for a smart device includes a protector part which is adhered to at least one of a flat display area and a curved display area of a smart device which includes at least one of the flat display area and the curved display area; and an adhesive layer which is formed by spreading a flowable adhesive composition between an entire area of a lower surface of the protector part and a display area of the smart device and then curing the flowable adhesive composition and adheres the entire area of the lower surface of the protector part to the flat display area and the curved display area.

The protector part may include at least one of a flat area section adhered to the flat display area and a curved area section provided in the flat area part so as to correspond to the curved display area and the protector part may be configured by one of glass, polymer film, and polymer resin.

A viscosity of the adhesive composition may be 1 to 500 cps.

The adhesive composition may include an ultraviolet (UV) polymerizable oligomer and a photopolymerization initiator.

The ultraviolet polymerizable oligomer may include one or more selected from a group consisting of a modified acrylic oligomer, a polyester-based oligomer, an epoxy-based oligomer, a urethane-based oligomer, a polyether-based oligomer, a polyacrylic oligomer, and a silicon acrylate-based oligomer and the photopolymerization initiator may include one or more selected from a group consisting of benzoin ether-based compounds, amine compounds, α-hydroxy ketone-based compounds, phenyl glyoxylate-based compounds, and acrylic phosphine oxide-based compounds.

The adhesive composition further includes a diluent and the diluent includes one or more selected from a group consisting of a styrene monomer, a methylmethacrylate monomer, an ethylmethacrylate monomer, an n-butylmethacrylate monomer, an iso-butylmethacrylate monomer, a t-butylmethacrylate monomer, a vinylchloride monomer, a vinylacetate monomer, an acrylonitrile monomer, a 2-ethylhexylmethacrylate monomer, a laurylmethacrylate monomer, a methylacrylate monomer, an ethylacrylate monomer, an n-butylacrylate monomer, an iso-butylacrylate monomer, a 2-ethylhexylacrylate monomer, an ethylene monomer, and an octadecylmethacrylate monomer or includes one or more selected from a group consisting of acrylic acid, methacrylic acid, 2-hydroxyethylmethacrylate, 2-hydroxypropylmethacrylate, di-methylaminoethylmethacrylate, t-butylaminoethylmethacrylate, di-ethylaminoethylmethacrylate, glycidylmethacrylate, 2-hydroxyethylacrylate, 2-hydroxypropylacrylate, itaconic acid, maleic acid, acrylamide, and N-methylolacrylamide.

In the adhesive composition, a content of the ultraviolent curable oligomer may be 50 to 80 wt%, a content of the diluent may be 14 to 49 wt%, and a content of the photopolymerization initiator may be 0.5 to 5 wt%.

The protector part may include a protector layer including at least one of the flat area section and the curved area section; a base material layer which includes a polymer film covering the entire area of a lower surface of the protector layer; and a bonding layer which is disposed between the protector layer and the base material layer to bond the protector layer and the base material layer to each other, and the adhesive layer adheres the entire area of the lower surface of the base material layer to the display area of the smart device.

An adhesion enhancement pattern including protrusions and grooves disposed between the protrusions may be formed on the lower surface of the base material layer.

A damaged area may be formed on at least one of the flat display area and the curved display area.

The protector part may further include a water repellent/oil repellent pattern which is formed along an edge of the base material layer and is formed of a polymer material having water repellency and oil repellency.

The water repellent/oil repellent pattern may include one or more materials selected from a group consisting of polytetrafluoroethylene (PTFE), perfluoroalkoxy (PFA), fluorinated ethylene propylene (FEP), ethylene + tetrafluoroethylene (ETFE), tetrafluoroethylene ethylene copolymer (ETEE), trichlorotrifluoroethylene (PCTFE), ethylene-chlorotrifluoroethylene (ECTFE), polyvinylidene fluoride (PVDF), or polyviny fluoride (PVF), polyimide (PI), polyether etherketone (PEEK), polyphenylene sulfide (PPS), polyamide (PA), polyacetal (POM), polyamide imide (PAI), polyether sulfone (PES), polyether imide (PEI), polycabonate (PC), and polypenylene ether (PPE).

The protector part may include a protector layer including at least one of the flat area section and the curved area section; a base material layer which includes a polymer film disposed below the protector layer to expose an edge area of the lower surface of the protector layer; and a bonding layer which is disposed between the protector layer and the base material layer to bond the protector layer and the base material layer to each other, and the adhesive layer adheres the entire area of the lower surface of the base material layer to the display area of the smart device.

According to another aspect of the present disclosure, a method of adhering a display part protector for a smart device including applying an adhesive composition on a display area of a smart device; diffusing and flowing the adhesive composition between the smart device and a protector part by loading the protector part on a display area of the smart device on which the adhesive composition is applied; and curing the adhesive composition.

A viscosity of the adhesive composition may be 1 to 500 cps and when the protector part is loaded, the adhesive composition may be diffused and flowed through the capillary phenomenon to the entire area between the protector part and the smart device due to a weight of the protector part.

According to the exemplary embodiments of the present disclosure, a flowable adhesive composition is diffused and flowed between the protector part and the smart device to form a layer of the adhesive composition and cure the layer to adhere the protector part to the smart device. Therefore, it is possible to protect the display part of the smart device and also restore a damaged or broken surface of the display part of the smart device.

Restoration may be performed regardless of a shape of the display part of the smart device with a flat or curved surface.

Furthermore, a risk of injury is reduced by restoring the broken or damaged display part and the outer appearance is improved and the restoration is allowed at a low cost for a short time, thereby saving an opportunity cost.

### BRIEF DESCRIPTION OF THE DRAWINGS

FIGS. 1A and 1B are a perspective view and a cross-sectional view for explaining a display part protector for a smart device according to an exemplary embodiment of the present disclosure.
FIG. 2 is a cross-sectional view for explaining a first exemplary embodiment of the protector part illustrated in FIGS. 1A and 1B.
FIG. 3 is a cross-sectional view for explaining a second exemplary embodiment of the protector part illustrated in FIGS. 1A and 1B.
FIG. 4 is a cross-sectional view for explaining a third exemplary embodiment of the protector part illustrated in FIGS. 1A and 1B.
FIG. 5 is a cross-sectional view for explaining a protector adhering base material according to an exemplary embodiment of the present disclosure;
FIG. 6 is a plan view for explaining a lower case illustrated in FIG. 5.
FIG. 7 is a plan view for explaining an upper case illustrated in FIG. 5.
FIG. 8 is a plan view for explaining an applying member illustrated in FIG. 5.

### DETAILED DESCRIPTION OF THE PRESENT INVENTION

In order to sufficiently understand the present disclosure, the operational advantages of the present disclosure, and the objectives achieved by the embodiments of the present disclosure, the accompanying drawings illustrating preferred embodiments of the present disclosure and the contents described therein need to be referred to.

Hereinafter, the present disclosure will be described in detail by explaining exemplary embodiments of the present disclosure with reference to the accompanying drawings. The same reference numerals which are denoted in the drawings refer to the same components.

The exemplary embodiment may be applied not only to the damaged display part of the smart device but also to a display part which is not damaged.

In the exemplary embodiment, the smart device may include a mobile, a tablet, and an automotive electric component.

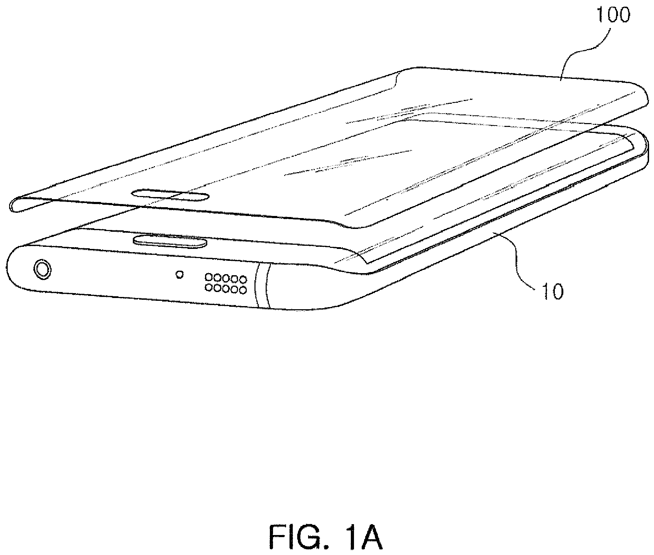

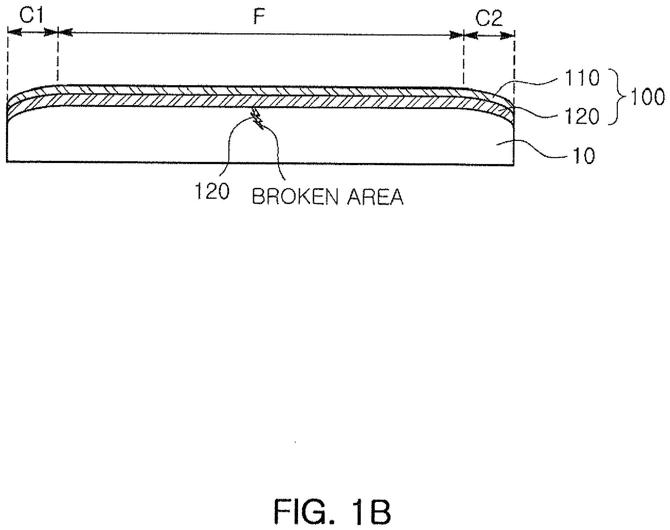

FIGS. 1A and 1B are a perspective view and a cross-sectional view for explaining a display part protector for a smart device according to an exemplary embodiment of the present disclosure.

Referring to FIGS. 1A and 1B, a display part protector 100 of a smart device according to an exemplary embodiment of the present disclosure is applied to a smart device 10 including a display part which has not only a flat display area but also a curved display area, for example, is applied to a smart phone to protect an entire display area of the smart device 10 and also restore a broken or damaged area of the display part. The exemplary embodiment may also be applied to the smart device 10 which does not have a curved display area but has a flat display area.

The display part protector 100 of the smart device according to an exemplary embodiment of the present disclosure may include a protector part 110 and an adhesive layer 120.

The protector part 110 may include a flat area section F which is disposed at a center part and is substantially flat and one or more curved area sections C1 and C2 which extend from an edge of the flat area section F and are formed of a curved surface. The flat area section F and the curved area sections C1 and C2 may be formed integrally with each other. Further, in the exemplary embodiment, when the central part of the display part of the smart device 10 is convex, the curved area sections may be provided at a central part of the protector part 110 correspondingly with the convex central part.

The flat area section F may have a rectangular shape having one pair of long sides which are opposite to each other and one pair of short sides which connect the long sides. The flat area section F is disposed above the flat display area in the display area of the smart device 10 to protect the flat display area.

The curved area sections C1 and C2 extend from the long sides of the flat area section F to have a constant width and include a first curved area section C1 and a second curved area section C2 which are formed of upwardly convex curved surfaces with respect to the display area of the smart device 10. The first curved area section C1 and the second curved area section C2 may have curvatures which continuously change so as not to form a discontinuous surface at the boundary with the flat area section F and are disposed above the curved display areas formed on both side of the flat display area in the display areas of the smart device 10 to protect the curved display areas.

The adhesive layer 120 is disposed between the entire lower surface area of the protector part 110 and the corresponding display area of the smart device 10 to adhere the entire lower surface area of the protector part 110 to the smart device 10.

In the exemplary embodiment, as illustrated in FIG. 1B, the adhesive layer 120 is filled in the broken area of the display part of the smart device to restore the physical damage of the surface of the display part without using a physical polishing process or an equipment such as a pressurizing device. As a result, the outer appearance of the display part is improved and the damaged or broken display part is restored at a low cost for a short time, so that an opportunity cost may be saved.

Further, the adhesive layer 120 may be disposed not only between the flat display area of the smart device 10 and the flat area F of the protector part 110 but also between the curved display area of the smart device 10 and the curved areas C1 and C2 of the protector part 110. In this specification, when the protector part 110 is adhered to the smart device 10 or the display area of the smart device by means of the adhesive layer 120, it may be defined that the protector part 110 is also adhered to other film or a coating film (not illustrated) which is adhered to the display area of the smart device 10 as well as the protector part 110 is directly adhered to the display area of the smart device 10.

When the adhesive layer 120 adheres only a partial area of the lower surface of the protector part 110 to the display area of the smart device 10, an air layer is formed in an area where the adhesive layer 120 is not formed, between the protector part 110 and the display area of the smart device 10 so that sensitivity of the smart device 10 for the touch of the user is lowered. Further, in terms of the user who views the smart device 10 through the protector part 110, a display characteristic of the smart device 10 may be lowered due to a difference in optical characteristics between the air layer and the adhesive layer 120. However, according to the present disclosure, since the entire area of the lower surface of the protector part 110 is adhered to the display area of the smart device 10 using the adhesive layer 120, the degradation of the touch sensitivity and the degradation of the display characteristic may be suppressed.

In one exemplary embodiment of the present disclosure, the adhesive layer 120 is formed by loading the protector part 110 above the display area of the smart device 10 after applying the flowable adhesive composition onto the display area of the smart device 10, spreading the adhesive composition over the entire area of the lower surface of the protector part 110 using a weight of the protector part 110, and then curing the adhesive composition. As an example, the adhesive composition may be cured by photopolymerization or thermal polymerization.

Generally, due to limitations during the manufacturing process, a radius of a curvature of the curved area of the protector part 110 and a radius of a curvature of the curved display area of the smart device 10 have different values within an allowable margin for each individual product, so that the radius of the curvature of the curved display area of the smart device 10 is different from the radius of the curvature of the curved area of the protector part 110 which will be applied thereto. As a result, when the protector part 110 is adhered to the smart device 10 using a known adhesive member such as an adhesive film which is not flowable, the adhesive member does not adhere the entire area of the lower surface of the protector part 110 to the smart device 10. Therefore, there is a problem in that an unintended air layer is formed between the protector part 110 and the display area of the smart device 10.

However, according to the exemplary embodiment, the flowable adhesive composition is spread between the protector part 110 and the smart device 10 and then cured to adhere the protector part 110 to the smart device 10. Therefore, the entire area of the lower surface of the protector part 110 may be adhered to the smart device 10 so that the degradation of the sensitivity for the user touch and the degradation of the display characteristic are suppressed. That is, even though an interval between the protector part 110 and the smart device 10 is not constant, a thickness of the adhesive layer 120 formed as described above may vary to compensate the difference so that the entire area of the lower surface of the protector part 110 may be adhered to the smart device 10.

According to an exemplary embodiment, the adhesive composition may have a viscosity of approximately 1 to 500 cps. When the viscosity of the adhesive composition is lower than 1 cps, a surface tension of the adhesive composition is too weak so that the adhesive composition may be undesirably spread to the outside of the protector part 110 beyond the area between the protector part 110 and the smart device 10. In contrast, when the viscosity of the adhesive composition exceeds 500 cps, a flowability of the adhesive composition is low so that the adhesive composition may not be spread over the entire area of the lower surface of the protector part 110 only by an own-weight of the protector part 110. As an exemplary embodiment, the viscosity of the adhesive composition is preferably approximately 10 to 250 cps.

According to an exemplary embodiment, the adhesive composition may include an ultraviolet (UV) polymerizable oligomer and a photopolymerization initiator.

The ultraviolet polymerizable oligomer may include one or more selected from a modified acrylic oligomer, a polyester-based oligomer, an epoxy-based oligomer, a urethane-based oligomer, a polyether-based oligomer, a polyacrylic oligomer, and a silicon acrylate-based oligomer. The photopolymerization initiator may include one or more selected from benzoin ether compounds, amine compounds, α-hydroxy ketone-based compounds, phenyl glyoxylate-based compounds, and acrylic phosphine oxide-based compounds.

In the meantime, the adhesive composition may further include diluent. The diluent may adjust the viscosity of the adhesive composition and then improve physical properties of the adhesive layer 120 after curing. The diluent may include one or more selected from a styrene monomer, a methylmethacrylate monomer, an ethylmethacrylate monomer, an n-butylmethacrylate monomer, an iso-butylmethacrylate monomer, a t-butylmethacrylate monomer, a vinylchloride monomer, a vinylacetate monomer, an acrylonitrile monomer, a 2-ethylhexylmethacrylate monomer, a laurylmethacrylate monomer, a methylacrylate monomer, an ethylacrylate monomer, an n-butylacrylate monomer, an iso-butylacrylate monomer, a 2-ethylhexylacrylate monomer, an ethylene monomer, and an octadecylmethacrylate monomer. Alternatively, the diluent may include one or more selected from acrylic acid, methacrylic acid, 2-hydroxyethylmethacrylate, 2-hydroxypropylmethacrylate, di-methylaminoethylmethacrylate, t-butylaminoethylmethacrylate, di-ethylaminoethylmethacrylate, glycidylmethacrylate, 2-hydroxyethylacrylate, 2-hydroxypropylacrylate, itaconic acid, maleic acid, acrylamide, and N-methylolacrylamide.

In the meantime, the adhesive composition may further include additives such as a photosensitizer, a colorant, a thickener, or a polymerization inhibitor.

According to an exemplary embodiment, when a polymerization composition includes the ultraviolet curable oligomer, the diluent, the photopolymerization initiator, and the additive, a content of the ultraviolent curable oligomer may be approximately 50 to 80 wt%, a content of the diluent may be approximately 14 to 49 wt%, a content of the photopolymerization initiator is approximately 0.5 to 5 wt%, and a content of the additive may be approximately 0.5 to 1 wt%.

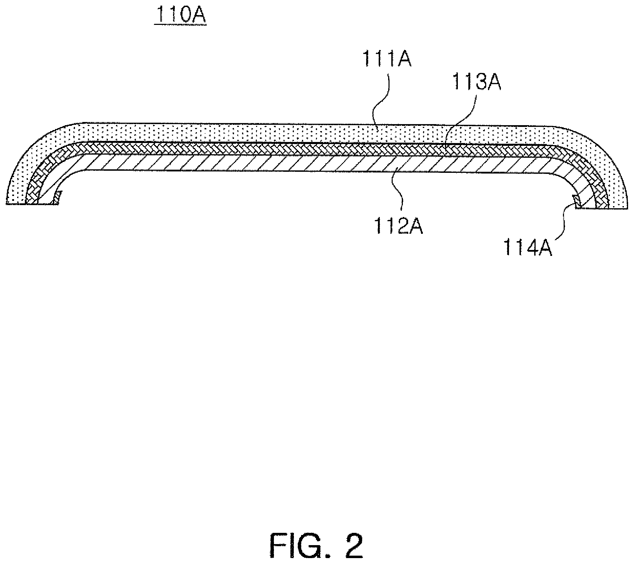

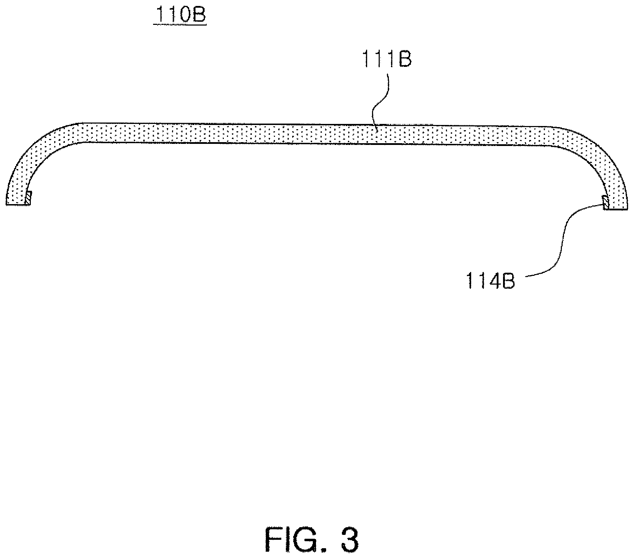

Hereinafter, the protector part 110 will be described in detail with reference to FIGS. 2 and 3.

FIG. 2 is a cross-sectional view for explaining a first exemplary embodiment of the protector part illustrated in FIGS. 1A and 1B.

Referring to FIG. 2, a protector part 110A according to a first exemplary embodiment of the present disclosure may include a protector layer 111A, a base material layer 112A, and a bonding layer 113A.

The protector layer 110A may be formed of a known glass material or film or polymer resin and may include a flat area F and curved areas C1 and C2 as described above.

The base material layer 112A may be formed of a transparent polymer material, for example, polyethylene terephthalate (PET) or acrylic resin and include a flat area F and curved areas C1 and C2 and formed to cover the entire area of the lower surface of the protector layer 111A.

The bonding layer 113A is disposed between the protector layer 111A and the base material layer 112A to bond the protector layer 111A and the base material layer 112A to each other. A material for the bonding layer 113A is not specifically limited and may use a known bonding or adhering material without any limitations.

In the protector part 110 with the above-described structure, the base material layer 112A which is bonded to the protector layer 111A by the bonding layer 113A may be adhered to the display area of the smart device 10 by the adhesive layer 120 and may suppress the protector layer 111A from being scattered when the protector layer 111A is broken.

According to an exemplary embodiment, on a lower surface of the base material layer 112A which is adhered to the display area of the smart device 10, an adhesion enhancement pattern (not illustrated) may be formed. The adhesion enhancement pattern may have a structure in which protrusions and grooves disposed therebetween are continuously disposed. For example, the protrusions may include regularly or irregularly formed dot patterns, linear patterns extending in one direction, or a grid pattern. A method of forming the adhesion enhancement pattern is not specifically limited. For example, the adhesion enhancement pattern may be formed by a sandblasting process, a dry etching process, a wet etching process or a molding coating process.

As described above, when the adhesion enhancement pattern is formed on the lower surface of the base material layer 112A which is in contact with the adhesive layer 120, a surface area of the lower surface of the base material layer 112A is increased to enhance adhesion with the adhesive layer 120. Further, a surface tension of the adhesive composition is enhanced during a process of adhering the protector part 110 to the smart device 10 to suppress the adhesive composition from being leaked to the outside of the protector part 110. Further, in the present disclosure, the entire area of the lower surface of the base material layer 112A is adhered to the smart device 10 by the adhesive layer 120, so that even though the adhesion enhancement pattern is formed on the lower surface of the base material layer 112A, the adhesion enhancement pattern may not be visibly recognized by the user or may not cause a problem of a display characteristic degradation such as degradation of the light transmittance.

According to an exemplary embodiment, the lower surface of the base material layer 112A on which the adhesion enhancement pattern is formed may have a surface roughness Ra of approximately 0.1 to 10 µm. When the surface roughness of the lower surface of the base material layer 112A is lower than 0.1 µm, it is difficult to achieve the above-described technical effect. In contrast, when the surface roughness of the lower surface of the base material layer 112A exceeds 10 µm, not only the thickness of the base material layer 112A becomes too thick but also the difference in heights between the adhesion enhancement patterns becomes too large to suppress the adhesive composition from uniformly spreading. Further, the adhering force may be partially lowered.

In the meantime, according to the exemplary embodiment of the present disclosure, the protector part 110 may further include a water repellent/oil repellent pattern 114A formed with a predetermined width along an edge of the base material layer 112A.

The water repellent/oil repellent pattern 114A may be formed of a material which has both the water repellency and oil repellency. When a material has both the water repellency and oil repellency, the material may be used as a material of the water repellent/oil repellent pattern 114A without any limitations, and is not specifically limited. For example, the water repellent/oil repellent pattern 114A may be formed of a fluoropolymer material such as polytetrafluoroethylene (PTFE), perfluoroalkoxy (PFA), fluorinated ethylene propylene (FEP), ethylene + tetrafluoroethylene (ETFE), tetrafluoroethylene ethylene copolymer (ETEE), trichlorotrifluoroethylene (PCTFE), ethylene-chlorotrifluoroethylene (ECTFE), polyvinylidene fluoride (PVDF), or polyviny fluoride (PVF) or a non-flouropolymer material such as polyimide (PI), polyether etherketone (PEEK), polyphenylene sulfide (PPS), polyamide (PA), polyacetal (POM), polyamide imide (PAI), polyether sulfone (PES), polyether imide (PEI), polycabonate (PC), or polypenylene ether (PPE).

Since the adhesive composition for forming the adhesive layer 120 of the present disclosure generally has hydrophilicity or hydrophobicity, when the water repellent/oil repellent pattern 114A is formed with a predetermined width along an edge of the base material layer 112A, the adhesive composition is more stably suppressed from being leaked to the outside of the protector part 110 during the process of adhering the protector part 110 to the smart device 10.

According to an exemplary embodiment, the water repellent/oil repellent pattern 114A may be formed to have a width of approximately 10 to 500 µm. When the width of the water repellent/oil repellent pattern 114A is less than 10 µm, not only the processing cost for forming the water repellent/oil repellent patter 114A is increased, but also the technical effect may be hardly achieved. In contrast, when the width of the water repellent/oil repellent pattern 114A exceeds 500 µm, the adhesion between the protector part 110 and the smart device 10 is relatively weakened in an area where the water repellent/oil repellent pattern 114A is formed. Therefore, separation between the protector part 110 and the smart device 10 may be undesirably caused in this part. For example, the water repellent/oil repellent pattern 114A may be formed to have a width of approximately 100 to 300 µm.

In the meantime, when the protector part 110A includes an opening through which a touch button or a camera lens of the smart device is exposed, that is, the water repellent/oil repellent pattern 114A may be formed to have a predetermined width, for example, a width of approximately 10 to 500 µm from an edge of the opening so as to enclose the opening.

FIG. 3 is a cross-sectional view for explaining a second exemplary embodiment of the protector part illustrated in FIGS. 1A and 1B.

Referring to FIG. 3, a protector part 110B according to a second exemplary embodiment of the present disclosure may include a protector layer 111B and a water repellent/oil repellent pattern 114B.

The protector part 110B according to the exemplary embodiment does not include the base material layer 112A and the adhesive layer 113A according to the first exemplary embodiment illustrated in FIG. 2. The protector layer 111B may be directly adhered to the smart device 10 with the adhesive layer 120 therebetween.

The protector layer 111B may have substantially the same structure as the protector layer 111A of the protector part 110 illustrated in FIG. 2 except that the above-described adhesion enhancement pattern (not illustrated) is formed on the lower surface. Therefore, the redundant detailed description thereof will be omitted.

The water-repellent/oil-repellent pattern 114B is substantially the same as the water repellent/oil repellent pattern 114A of the protector part 110 illustrated in FIG. 2 except that the water repellent/oil repellent pattern 114B is formed along the edge of the lower surface of the protector layer 111B. The detailed description thereof will be omitted.

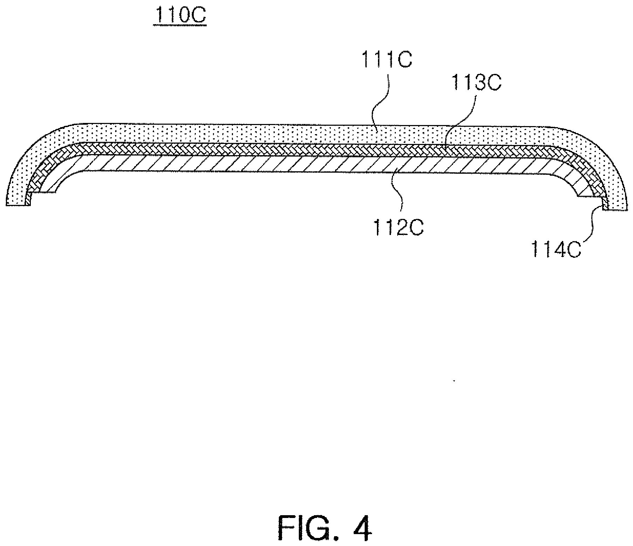

FIG. 4 is a cross-sectional view for explaining a third exemplary embodiment of the protector part illustrated in FIGS. 1A and 1B.

Referring to FIG. 4, a protector part 110C according to a third exemplary embodiment of the present disclosure may include a protector layer 111X, a base material layer 112C, a bonding layer 113C, and a water repellent/oil repellent pattern 114C.

The protector part 110 according to the exemplary embodiment is substantially the same as the protector part 110 which has been described with reference to FIG. 2 except that the base material layer 112C and the bonding layer 113C is disposed below the protector layer 111C so as to expose the edge of the lower surface of the protector layer 111C as much as a predetermined width and the water repellent/oil repellent pattern 114C is formed on the exposed lower surface of the protector layer 111C. Therefore, the redundant detailed description thereof will be omitted.

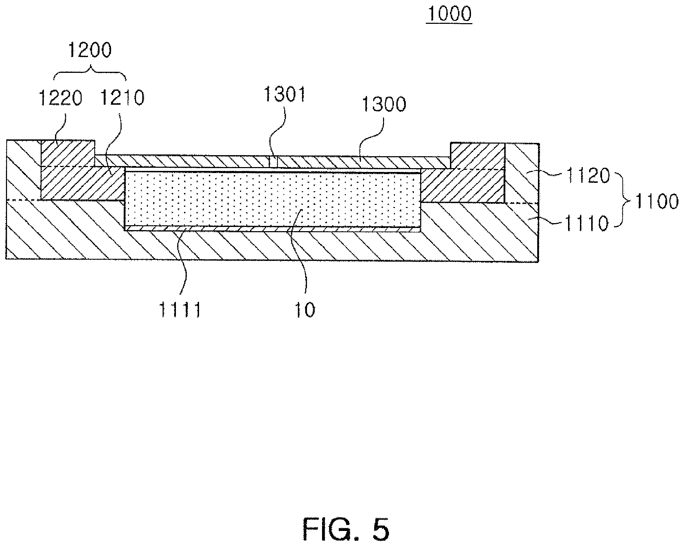

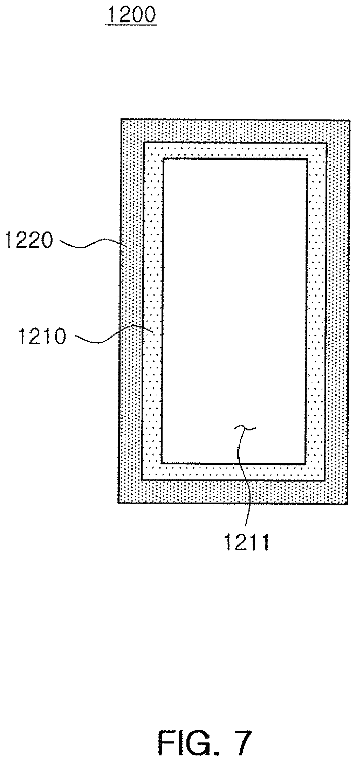

The base material layer 112C and the bonding layer 113C may expose the edge of the lower surface of the protector layer 111C as much as a width of approximately 10 to 500 µm, preferably approximately a width of 100 to 300 µm. A part of the adhesive composition for forming the adhesive layer 120 which is exposed between the protector part 110C and the smart device outwardly protrudes during the process of adhering the protector part 110C to the smart device 10. In this case, when an external object comes into contact with the exposed part of the adhesive composition, the surface tension of the adhesive composition is broken so that the adhesive composition may be undesirably leaked out of the protector part 110. The problem may also be caused when the protector part 110 is adhered to the smart device 10 using a display part protector adhering apparatus 1000 of a smart device according to an exemplary embodiment of the present disclosure which will be described with reference to FIGS. 5 to 8 below. When the base material layer 112C and the adhesive layer 113C are formed to expose the edge of the lower surface of the protector layer 111C as described above as much as the width of approximately 10 to 500 µm, the exposed protruding part of the adhesive composition does not protrude to the outside of the protector layer 111C. As a result, the adhesive composition is in contact with the display part protector adhering apparatus 1000 of the smart device so that a problem in that the adhesive composition is leaked to the outside may be solved.

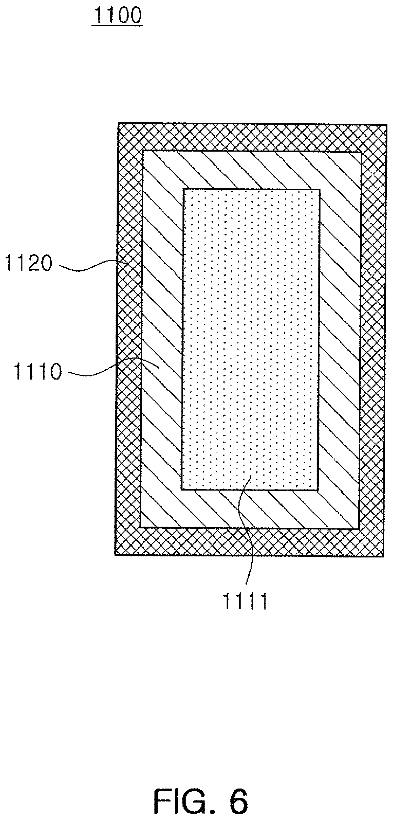

FIG. 5 is a cross-sectional view for explaining a display part protector adhering apparatus of a smart device according to an exemplary embodiment of the present disclosure and FIGS. 6 to 8 are plan views for explaining a lower case, an upper case, and an applying member illustrated in FIG. 5.

Referring to FIGS. 5 to 8, the display part protector adhering apparatus 1000 of the smart device according to the exemplary embodiment of the present disclosure includes a lower case 1100, an upper case 1200, and an application plate 1300.

The lower case 1100 may include a first supporting part 1110 and a first partition part 1120.

The first supporting part 1110 includes a fixing groove 1111 into which the smart device 10 is inserted and fixed at a center part thereof and includes a first upper plane which is flat and encloses the fixing groove 1111. The fixing groove 1111 may have a shape corresponding to a planar shape of the smart device 10 and have a depth which is smaller than the thickness of the smart device 10. A predetermined thickness of the smart device 10 inserted in the fixing groove 1111 may protrude from the first upper plane of the first supporting part 1110 while being fixed so as not to move in a horizontal direction. A shape of the first lower surface of the first supporting part 1110 which is opposite to the first upper plane is not specifically limited.

The first partition part 1120 is disposed so as to enclose the fixing groove 1111 on the first upper plane of the first supporting part 1110 and may protrude from the first upper plane of the first supporting part 1110 with a predetermined height. The first partition part 1120 may be formed to expose the fixing groove 1111 and a predetermined width of the first upper plane from the fixing groove 1111.

The upper case 1200 may include a second supporting part 1210 and a second partition part 1220.

The second supporting part 1210 may include a second lower plane which is supported in an area exposed by the first partition part 1120 of the first upper plane of the first supporting part 1110 and a second upper plane disposed on the second lower plane so as to be opposite to the second lower plane. Further, an opening 1211 may be formed at a center part thereof to entirely expose the fixing groove 1111 and the smart device 10 inserted therein.

According to an exemplary embodiment, the second supporting part 1210 is inserted into the first partition part 1120 so that the second lower plane is supported by the first upper plane of the first supporting part 1110 which is exposed by the first partition part 1120 and an external side surface connecting the second lower plane and the second upper plane is supported by an inner surface of the first partition part 1120 to be fixed so as not to move in a horizontal direction. The opening 1211 of the second supporting part 1210 may have the same planar shape as the fixing groove 1111 and the smart device 10 protruding from the first upper plane of the first supporting part 1110 may be inserted into the opening 1211 of the second supporting part 1210 to be fixed. In order to support the application plate 1300 to be spaced apart from the smart device 10 with a predetermined interval, a thickness of the second supporting part 1210 may be larger than a thickness of the smart device 10 in a protruding part from the first upper plane.

The second partition part 1220 is disposed so as to enclose the opening 1211 on the second upper plane of the second supporting part 1210 and may protrude from the second upper plane with a predetermined height. The second partition part 1220 may be formed to expose the opening 1211 and a predetermined width of the second upper plane from the opening 1211.

The application plate 1300 may have a planar structure having an area which is larger than that of the fixing groove 1111 and a lower surface may be supported by the second upper plane which is inserted into the second partition part 1220 to be exposed by the second partition part 1220. Further, one or more injection holes may be formed at a center part to inject the adhesive composition.

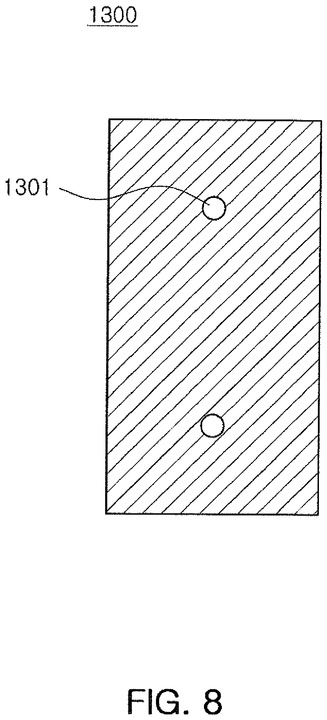

Even though two injection holes are illustrated in FIG. 8, two or more injection holes may be formed on the application plate 1300. Further, as described above, since the thickness of the second supporting part 1210 is larger than the thickness of the smart device 10 in a protruding part from the first upper plane, the application plate 1300 may be disposed on the display area of the smart device 10 so as to be spaced apart therefrom with a predetermined interval.

In the meantime, when the application plate 1300 is inserted in the second partition part 1220, a side of the application plate 1300 is supported by the inner surface of the second partition part 1220 so as not to move in the horizontal direction.

Hereinafter, a method of adhering the protector to the smart device 10 using the display part protector adhering apparatus 1000 of the smart device will be described.

The method of adhering a display part protector for a smart device according to an exemplary embodiment of the present disclosure includes applying an adhesive composition on a display area of the smart device 10, forming the adhesive composition layer between the smart device 10 and the protector part 110 by loading the protector part 110 on the display area of the smart device 10 on which the adhesive composition is applied, and curing the adhesive composition.

In the applying of the adhesive composition on the display area of the smart device 10, first, after fixing the smart device 10 to the fixing groove 1111 of the lower case 1100, the upper case 1200 is inserted in the first partition part 1120 of the lower case 1100 to be fixed thereto. Next, the application plate 1300 is inserted in the second partition part 1220 of the upper case 1200 to fix the application plate to an upper portion of the portable display device 10. Next, the adhesive composition is applied on the display area of the smart device 10 through the injection hole 1301 of the application plate 1300.

In the forming of the adhesive composition layer between the smart device 10 and the protector part 110 by loading the protector part 110 on the display area of the smart device 10 on which the adhesive composition is applied, after removing the application plate 1300 from the upper case 1200, first, the protector part 110 may be loaded on the display area of the smart device 10 through the opening 1211 of the second supporting part 1210 of the upper case 1200. When the protector part 110 is loaded on the display area of the smart device 10 on which the adhesive composition is applied, due to a weight of the protector part 110, the adhesive composition is diffused and flowed through the capillary phenomenon to the entire area between the protector part 110 and the smart device 10 to form the adhesive composition layer. In the meantime, when an additional external force is not applied to the protector part 110, the adhesive composition may not be leaked to the outside of the area between the protector part 110 and the smart device 10 due to the surface tension.

In the curing of the adhesive composition, the adhesive composition may be photo-cured or thermally cured. The photocuring method and the thermal curing method of the adhesive composition are not specifically limited and a known method may be applied without any limitations. For example, when the adhesive composition is photo-cured, the adhesive composition may be cured by ultraviolet ray, visible ray or infrared ray emitted from sunlight, a fluorescent lamp, an LED light source, or a UV lamp.

According to the present disclosure, a flowable adhesive composition is diffused and flowed between the protector part and the smart device to form a layer of the adhesive composition and cure the layer to adhere the protector part to the smart device. Therefore, even though a curvature of the curved display area of the smart device and the curvature of the curved area of the protector part are different from each other, it is possible to stably adhere the entire area of the protector part to the smart device. As a result, degradation of touch sensitivity or degradation of display characteristic which are caused by an air layer formed between the protector part and the smart device may not be caused.

Further, according to the present disclosure, an adhesion enhancement pattern is formed on a surface of the protector part which is in direct contact with the adhesive composition and the water repellent/oil repellent pattern is formed along an edge of the surface. Therefore, the adhesive composition is suppressed from being leaked to the outside of the protector part during the process of adhering the protector part to the smart device to stably and easily adhere the protector part to the smart device.

In this specification, a description of a method or a method step shall be understood also as a description of means for implementing the respective method or step thereof, and vice versa. Features shall be deemed combinable with each other also if their combination is not expressly mentioned, to the extent that the combination is technically feasible. Features described in a certain combination, context, embodiment, claim or figure shall be understood as usable also in another combination, context, embodiment, claim or figure, to the extent that this is feasible.

## Claims

1. A display part protector for a smart device, comprising:
a protector part which is adhered to at least one of a flat display area and a curved display area of a smart device which includes at least one of the flat display area and the curved display area; and
an adhesive layer which is formed by spreading a flowable adhesive composition between an entire area of a lower surface of the protector part and a display area of the smart device and then curing the flowable adhesive composition and adheres the entire area of the lower surface of the protector part to the flat display area and the curved display area.

2. The display part protector of claim 1, wherein the protector part includes at least one of a flat area section adhered to the flat display area; and a curved area section provided in the flat area part so as to correspond to the curved display area, and
the protector part is configured by one of glass, polymer film, and polymer resin.

3. The display part protector of claim 1, wherein a viscosity of the adhesive composition is 1 to 500 cps.

4. The display part protector of claim 1, wherein the adhesive composition includes an ultraviolet (UV) polymerizable oligomer and a photopolymerization initiator.

5. The display part protector of claim 4, wherein the ultraviolet polymerizable oligomer includes one or more selected from a group consisting of a modified acrylic oligomer, a polyester-based oligomer, an epoxy-based oligomer, a urethane-based oligomer, a polyether-based oligomer, a polyacrylic oligomer, and a silicon acrylate-based oligomer and the photopolymerization initiator includes one or more selected from a group consisting of benzoin ether-based compounds, amine compounds, α-hydroxy ketone-based compounds, phenyl glyoxylate-based compounds, and acrylic phosphine oxide-based compounds.

6. The display part protector of claim 4, wherein the adhesive composition further includes a diluent and
the diluent includes one or more selected from a group consisting of a styrene monomer, a methylmethacrylate monomer, an ethylmethacrylate monomer, an n-butylmethacrylate monomer, an iso-butylmethacrylate monomer, a t-butylmethacrylate monomer, a vinylchloride monomer, a vinylacetate monomer, an acrylonitrile monomer, a 2-ethylhexylmethacrylate monomer, a laurylmethacrylate monomer, a methylacrylate monomer, an ethylacrylate monomer, an n-butylacrylate monomer, an iso-butylacrylate monomer, a 2-ethylhexylacrylate monomer, an ethylene monomer, and an octadecylmethacrylate monomer or includes one or more selected from a group consisting of acrylic acid, methacrylic acid, 2-hydroxyethylmethacrylate, 2-hydroxypropylmethacrylate, di-methylaminoethylmethacrylate, t-butylaminoethylmethacrylate, di-ethylaminoethylmethacrylate, glycidylmethacrylate, 2-hydroxyethylacrylate, 2-hydroxypropylacrylate, itaconic acid, maleic acid, acrylamide, and N-methylolacrylamide.

7. The display part protector of claim 6, wherein in the adhesive composition, a content of the ultraviolent curable oligomer is 50 to 80 wt%, a content of the diluent is 14 to 49 wt%, and a content of the photopolymerization initiator is 0.5 to 5 wt%.

8. The display part protector of claim 2, wherein the protector part includes:
a protector layer including at least one of the flat area section and the curved area section;
a base material layer which includes a polymer film covering the entire area of a lower surface of the protector layer; and
a bonding layer which is disposed between the protector layer and the base material layer to bond the protector layer and the base material layer to each other, and
the adhesive layer adheres the entire area of the lower surface of the base material layer to the display area of the smart device.

9. The display part protector of claim 8, wherein an adhesion enhancement pattern including protrusions and grooves disposed between the protrusions is formed on the lower surface of the base material layer.

10. The display part protector of claim 1, wherein a damaged area is formed on at least one of the flat display area and the curved display area.

11. The display part protector of claim 8, wherein the protector part further includes a water repellent/oil repellent pattern which is formed along an edge of the base material layer and is formed of a polymer material having water repellency and oil repellency.

12. The display part protector of claim 11, wherein the water repellent/oil repellent pattern includes one or more materials selected from a group consisting of polytetrafluoroethylene (PTFE), perfluoroalkoxy (PFA), fluorinated ethylene propylene (FEP), ethylene + tetrafluoroethylene (ETFE), tetrafluoroethylene ethylene copolymer (ETEE), trichlorotrifluoroethylene (PCTFE), ethylene-chlorotrifluoroethylene (ECTFE), polyvinylidene fluoride (PVDF), or polyviny fluoride (PVF), polyimide (PI), polyether etherketone (PEEK), polyphenylene sulfide (PPS), polyamide (PA), polyacetal (POM), polyamide imide (PAI), polyether sulfone (PES), polyether imide (PEI), polycabonate (PC), and polypenylene ether (PPE).

13. The display part protector of claim 2, wherein the protector part includes:
a protector layer including at least one of the flat area section and the curved area section;
a base material layer which includes a polymer film disposed below the protector layer to expose an edge area of the lower surface of the protector layer; and
a bonding layer which is disposed between the protector layer and the base material layer to bond the protector layer and the base material layer to each other, and
the adhesive layer adheres the entire area of the lower surface of the base material layer to the display area of the smart device.

14. A method of adhering a display part protector for a smart device, the method comprising:
applying an adhesive composition on a display area of a smart device;
diffusing and flowing the adhesive composition between the smart device and a protector part by loading the protector part on a display area of the smart device on which the adhesive composition is applied; and
curing the adhesive composition.

15. The method of claim 14, wherein a viscosity of the adhesive composition is 1 to 500 cps and
when the protector part is loaded, the adhesive composition is diffused and flowed through the capillary phenomenon to the entire area between the protector part and the smart device due to a weight of the protector part.
